# FASCICULE DE BREVET EUROPEEN

(11) **EP 2 011 989 B1**
(45) Date de publication et mention de la délivrance du brevet: **03.08.2011**
(21) Numéro de dépôt: 08290581.1
(22) Date de dépôt: 19.06.2008
(51) Int. Cl.: F23R 7/00, F02K 7/04

(54) **Moteur à détonations pulsées fonctionnant avec un mélange carburant-air**
Pulsierendes Detonationssystem, das mit einem Kraftstoff-Luft-Gemisch funktioniert
Pulse detonation engine operating with a mix of fuel and air

(30) Priorité: 02.07.2007 FR 0704756
(43) Date de publication de la demande: 07.01.2009
(73) Titulaire: MBDA France, 75016 Paris (FR)
(72) Inventeur: Daniau, Emeric, 18400 St Florent sur Cher (FR); Falempin, François, 78730 St Arnoult (FR); Bobo, Etienne, 18000 Bourges (FR); Minard, Jean-Pierre, 18340 Soye en Septaine (FR)
(74) Mandataire: Bonnetat, Christian

(56) Documents cités:
- FR-A- 2 863 314
- US-A1- 2005 279 078
- US-A1- 2007 144 179
- PUTNAM A A ET AL: "PULSE COMBUSTION" PROGRESS IN ENERGY AND COMBUSTION SCIENCE, ELSEVIER SCIENCE PUBLISHERS, AMSTERDAM, NL, vol. 12, 1986, pages 43-79, XP000907675 ISSN: 0360-1285

## Description

La présente invention concerne les moteurs à détonations pulsées fonctionnant avec un mélange détonant carburant-air, allumé à l'aide de moyens d'allumage à basse énergie, par exemple du genre bougie pour moteur à combustion interne.

Dans un moteur à détonations pulsées connu de ce type, on prévoit au moins un tube de prédétonation de diamètre plus petit que celui de la chambre de combustion dudit moteur, ledit tube de prédétonation débouchant dans ladite chambre de combustion et étant pourvu desdits moyens d'allumage à basse énergie disposés à une extrémité dudit tube de prédétonation.

Lorsque le mélange détonant carburant-air contenu dans ledit tube de prédétonation est initié par lesdits moyens d'allumage à basse énergie, il s'ensuit dans ce dernier un régime de flamme laminaire caractérisé par une vitesse de propagation très faible, de l'ordre de quelques cm/s à quelques m/s.

Lors de la propagation d'une telle flamme dans le tube de prédétonation, on observe initialement une accélération liée à l'expansion des produits de combustion (de densité plus faible que les gaz frais) par effet "piston", ce qui entraîne une déstabilisation du front de flamme qui se plisse (effet de viscosité et de couches limites aux parois), la flamme devenant donc turbulente ; sa surface augmente, ainsi que le taux de libération d'énergie, ce qui contribue encore à renforcer son accélération.

La vitesse de la flamme passe ainsi de quelques cm/s à quelques centaines de m/s et atteint le régime dit "de blocage thermique". La flamme se propage alors à une vitesse proche de celle du son par rapport aux gaz brûlés, soit de l'ordre de 800 m/s à 900 m/s pour un milieu carburant-air.

Cette très forte célérité engendre des ondes de pression d'un niveau élevé dans les gaz frais, de l'ordre de quelques bars.

Un tel régime de propagation est relativement instable et peut évoluer vers un régime de détonation. Contrairement à l'accélération précédente, ce passage est brutal (qualifié "d'explosion dans une explosion"), l'onde de pression devenant une onde de choc et la célérité de la flamme passant de 800-900 m/s à 1800-2000 m/s.

L'intégralité de ce phénomène est appelé "transition déflagration-détonation" et l'expérience a montré que, dans le cas d'un tube lisse, la distance nécessaire pour observer le phénomène était de l'ordre de plusieurs mètres à plusieurs dizaines de mètres, selon les mélanges utilisés.

Pour réduire au maximum cette distance (ainsi que le temps) nécessaire pour obtenir une transition déflagration-détonation, il convient donc de faciliter le passage d'une flamme laminaire à une flamme turbulente, puis d'atteindre le plus vite possible le régime de blocage thermique et enfin de provoquer "l'explosion dans l'explosion".

Pour ce faire, une technique connue très utilisée est celle qui consiste à utiliser une spirale (dite "de Schel'kin") ou des obstacles en forme de rondelles espacées régulièrement, pour augmenter artificiellement la turbulence dans le tube de prédétonation.

On peut ainsi abaisser la longueur nécessaire du tube de prédétonation à 20-30 fois le diamètre d1 de ce dernier.

Dans tous les cas, on définit le "rapport de blocage" comme étant le rapport entre la section de passage délimitée par l'obstacle et la section de passage dudit tube de prédétonation.

Il a été montré expérimentalement que le meilleur rapport de blocage est compris entre 0,45 et 0,5 avec un pas correspondant à une fois le diamètre.

Bien que l'on fasse généralement l'hypothèse que l'onde de choc de la détonation est plane et occupe toute la section du tube de prédétonation, en réalité il se forme plusieurs ondes de choc de propagation longitudinale et transversale, les ondes transverses ayant des collisions périodiques.

Une onde de détonation possède donc une structure tridimensionnelle, cette structure dépendant fortement de la cinétique de décomposition du mélange détonation, et donc du temps caractéristique de la réaction chimique.

Les points situés à chaque intersection entre l'onde de détonation principale et les ondes transverses sont nommés "points triples", la trajectoire de ces points triples définissant une structure périodique appelée "cellule de détonation" dont la longueur L et la largeur λ (approximativement égale de 0,6 à 0,7 L) sont corrélées au temps caractéristique limitant des réactions chimiques dans le mélange détonant, c'est-à-dire essentiellement son temps d'induction.

Pour qu'une détonation autonome et stationnaire se propage dans un tube de prédétonation, il faut que le diamètre de ce tube soit supérieur à la largeur λ de la cellule de détonation. Des détonations dites "marginales" peuvent se propager dans des tubes de dimensions inférieures, mais ces phénomènes sont relativement instables et demandent des conditions particulières.

La largeur de cellule λ des mélanges carburant-air (pour des richesses aux alentours de la stoechiométrie) est de l'ordre de 50 mm à 60 mm (à l'exception notable du méthane qui présente une taille de cellule de plus de 280 mm et de certains alcènes et alcynes gazeux comme l'éthylène et l'acétylène), ce qui fixe donc une condition minimale sur le diamètre d1 d'un tube de prédétonation destiné à supporter la propagation d'une onde de détonation.

Si une détonation a pu être formée dans ledit tube de prédétonation -ce qui entraîne que ledit diamètre d1 de celui-ci est supérieur à la largeur λ de la cellule de détonation- il convient ensuite de transmettre cette détonation à ladite chambre de combustion dont le diamètre d2 est bien plus grand que ledit diamètre d1.

On a trouvé que la qualité de la transmission dépendait d'une valeur critique Kc du rapport entre ledit diamètre d1 du tube de prédétonation et la largeur λ de la cellule de détonation. Les études réalisées initialement par Mitrofanov et Soloukhin dans les années 1960, puis étendues par Moen et Knystautas dans les années 1980, indiquent que cette valeur critique Kc est égale à 13. Il a été ensuite remarqué que cette valeur critique est liée à la régularité de la structure cellulaire et qu'elle peut varier entre 13 et 24 selon les mélanges et leur dilution.

Ainsi :
- si d1 > Kc.λ, il y a un faible découplage entre l'onde de choc et la flamme lors de la diffraction entre le tube de prédétonation et la chambre de combustion, mais on conserve la structure cellulaire de l'onde. La détonation se transmet telle quelle dans la chambre de combustion de diamètre d2 ;
- si d1 = Kc.λ, on observe un découplage entre l'onde de choc et la flamme ; mais, dans certaines conditions, le ré-allumage de la détonation peut se produire ;
- enfin, si d1 < Kc.λ, la flamme se découple de l'onde de choc et cette dernière n'est pas d'amplitude suffisante pour ré-allumer le mélange. Le choc s'atténue et devient une onde acoustique. La détonation a été détruite au cours de sa diffraction entre le tube de prédétonation et la chambre de combustion.

On voit donc que, dans les moteurs à détonations pulsées du type décrit ci-dessus, on cherche à amorcer les détonations dans le tube de prédétonation et à faire ensuite transiter ces détonations jusque dans la chambre de combustion du moteur et qu'il en résulte des contraintes dimensionnelles importantes en ce qui concerne le diamètre et la longueur du tube de prédétonation, ces contraintes dimensionnelles rendant ce dernier volumineux.

Il en résulte donc des problèmes d'encombrement importants, d'autant plus que, dans les moteurs à détonations pulsées connus, ledit tube de prédétonation est installé extérieurement à la chambre de combustion, en prolongement axial de celle-ci pour y déboucher de manière centrale. Une telle géométrie est bien entendu encombrante et, de plus, elle soulève des difficultés pour alimenter ledit tube de prédétonation en air et en carburant.

La présente invention a pour objet de remédier à ces inconvénients.

A cette fin, selon l'invention, le moteur à détonations pulsées et à allumage commandé, fonctionnant avec un mélange détonant carburant-air et comportant :
- une chambre de combustion fermée à l'une de ses extrémités par un mur de poussée, et
- au moins deux tubes de prédétonation pourvus de moyens d'allumage à basse énergie et en communication avec ladite chambre de combustion par une de leurs extrémités débouchant dans ladite chambre de combustion en regard dudit mur de poussée, la disposition desdits tubes de prédétonation étant telle que les ondes qui les parcourent sont réfléchies par ledit mur de poussée dans ladite chambre de combustion,
est remarquable en ce que :
- dans lesdits tubes de prédétonation, les flammes sont amenées jusqu'à un état de propagation proche des conditions de blocage thermique sans chercher à atteindre le régime de détonation ; et
- la détonation dudit mélange détonant contenu dans ladite chambre de combustion est amorcée en un point de ladite chambre de combustion porté à de très hautes pression et température par les ondes de choc engendrées dans lesdits tubes de prédétonation, puis réfléchies et focalisées par ledit mur de poussée audit point.

Ainsi, conformément à la présente invention, on ne cherche pas à obtenir des détonations dans les tubes de détonation, mais seulement des déflagrations rapides. On évite donc les inconvénients de dimensionnement mentionnés ci-dessus, le dimensionnement total des tubes de prédétonation mis en oeuvre par l'invention étant très inférieur au dimensionnement des tubes de prédétonation utilisés par la technique antérieure. De plus, le moteur de la présente invention pourvu d'au moins deux tubes de prédétonation présente une bien meilleure robustesse qu'un moteur à tube de prédétonation unique.

Pour réduire l'encombrement du moteur à détonations pulsées conforme à la présente invention, les tubes de prédétonation sont de préférence disposés latéralement par rapport à ladite chambre de combustion, au moins approximativement le long de celle-ci, ce qui, de plus, facilite l'alimentation en air et en carburant desdits tubes de prédétonation.

Dans un mode de réalisation avantageux de la présente invention, le moteur à détonations pulsées comporte deux tubes de prédétonation en positions latérales diamétralement opposées par rapport à ladite chambre de combustion.

Avantageusement, chaque tube de prédétonation est ouvert à son extrémité opposée à celle qui est en regard dudit mur de poussée et lesdits moyens d'allumage à basse énergie sont disposés en position intermédiaire entre ces deux extrémités, par exemple dans la partie médiane dudit tube. Grâce à une telle disposition, on limite l'effet des gradients de pression en arrière de l'onde de tête et on favorise l'accélération de la flamme dans le tube de prédétonation. De plus, lesdits tubes de prédétonation participent ainsi à la poussée du moteur.

De préférence, afin d'obtenir un allumage sûr et régulier, lesdits moyens d'allumage à basse énergie comprennent, pour chaque tube de prédétonation, deux bougies d'allumage diamétralement opposées.

De façon usuelle, dans le moteur à détonations pulsées de l'invention, on prévoit des obstacles intérieurs successifs définissant chacun un rapport de blocage. Conformément à une caractéristique de la présente invention, lesdits obstacles intérieurs sont disposés de façon que lesdits rapports de blocage décroissent symétriquement depuis lesdits moyens d'allumage à basse énergie jusqu'à chacune desdites extrémités dudit tube de prédétonation. Le calcul et l'expérience ont montré qu'il était avantageux que :
- de part et d'autre desdits moyens d'allumage, dans des zones voisines de ceux-ci, le rapport de blocage soit élevé, de l'ordre de 0,58 ou supérieur ;
- dans les zones voisines desdites extrémités de chaque tube de prédétonation, le rapport de blocage soit faible, de l'ordre de 0,25 ; et
- entre lesdites zones voisines desdits moyens d'allumage et lesdites zones voisines desdites extrémités, le rapport de blocage soit moyen, de l'ordre de 0,44.

Les figures du dessin annexé feront bien comprendre comment l'invention peut être réalisée. Sur ces figures, des références identiques désignent des éléments semblables.

La figure 1 est une vue en coupe axiale schématique d'un mode de réalisation du moteur à détonations pulsées conforme à la présente invention.

La figure 2 est une coupe schématique selon la ligne II-II de la figure 1.

La figure 3 illustre le fonctionnement du moteur à détonations pulsées conforme à la présente invention, à l'aide d'une représentation partielle de la figure 1.

La figure 4 est une coupe longitudinale schématique d'un tube de prédétonation pour le moteur à détonations pulsées conforme à l'invention.

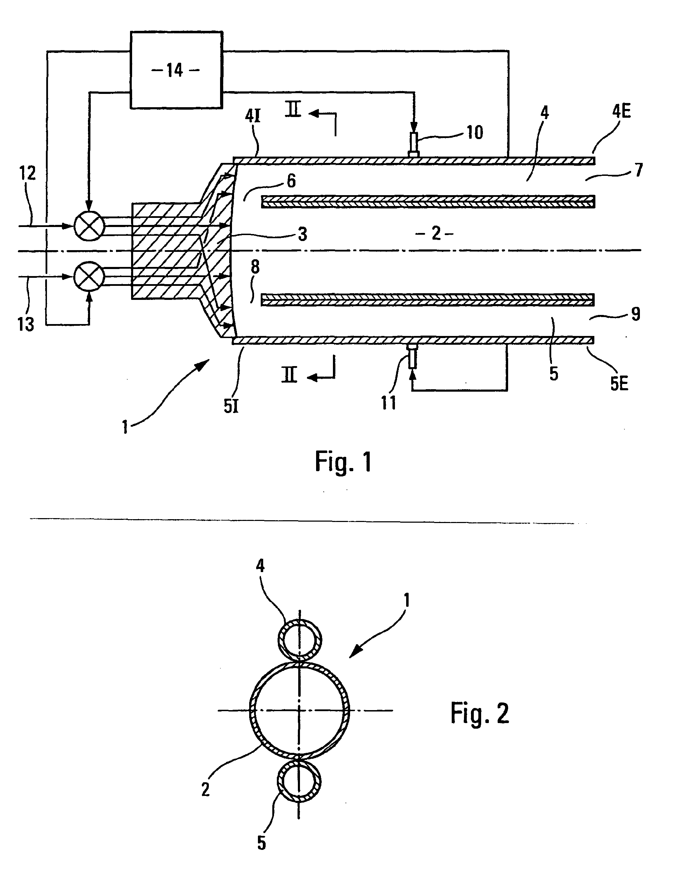

Le moteur à détonations pulsées 1, conforme à la présente invention et représenté schématiquement sur les figures 1 et 2, comporte une chambre de combustion 2, fermée à l'une de ses extrémités par un mur de poussée 3 et ouverte à son extrémité opposée à ce dernier. Le moteur 1 comporte de plus deux tubes de prédétonation 4 et 5 disposés latéralement par rapport à la chambre de combustion 2, dans des positions diamétralement opposées par rapport à celle-ci. Ainsi, chaque tube de prédétonation 4, 5 est disposé le long de la chambre de combustion 2.

L'extrémité 4I du tube de prédétonation 4, disposée en regard du mur de poussée 3, débouche dans la chambre de combustion 2 par un orifice 6, alors que l'extrémité 4E dudit tube 4, opposée au mur de poussée 3, est ouverte par un orifice 7.

De même, l'extrémité 51 du tube de prédétonation 5, disposée en regard du mur de poussée 3, débouche dans la chambre de combustion 2 par un orifice 8, alors que l'extrémité 5E dudit tube 5, opposée audit mur de poussée 3, est ouverte par un orifice 9.

Les tubes de prédétonation 4 et 5 sont pourvus de moyens d'allumage à basse énergie 10 ou 11, respectivement. Les moyens d'allumage 10 et 11 sont disposés en position intermédiaire des tubes 4 et 5, respectivement, de préférence dans la partie médiane de ceux-ci.

Un système d'alimentation en carburant 12 et un système d'alimentation en air 13 sont aptes à alimenter la chambre de combustion 2 et les tubes de détonation 4 et 5.

Un dispositif de commande 14 pilote de façon cyclique les moyens d'allumage 10 et 11 et les systèmes d'alimentation 12 et 13.

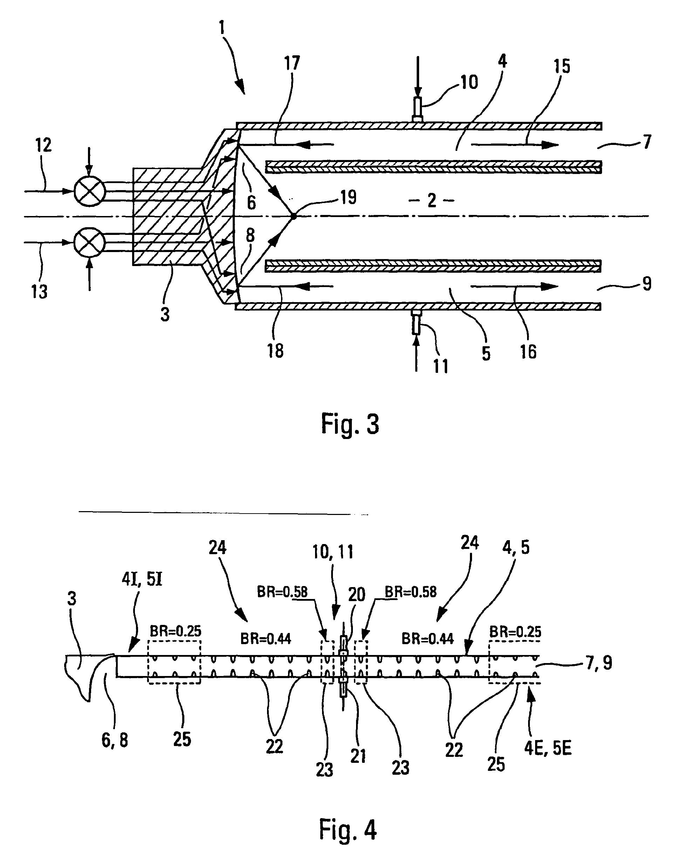

A chaque étincelle engendrée par les moyens d'allumage 10 et 11 dans les tubes de prédétonation 4 et 5 remplis de mélange carburant-air, ce dernier est le siège d'une déflagration dont la flamme et l'onde thermique se déplacent avec une vitesse sonique, dans les deux sens, dans lesdits tubes de prédétonation 4 et 5. Les ondes de choc respectives, symbolisées par les flèches 15 et 16 sur la figure 3 et se dirigeant respectivement vers les orifices 7 et 9, participent à la poussée du moteur 1. Les ondes de choc respectives, symbolisées par les flèches 17 et 18 sur ladite figure 3 et se dirigeant vers le mur de poussée 3, sont réfléchies et focalisées par ce dernier en direction d'un point 19 de ladite chambre de combustion 3, en passant par les orifices 6 et 8. Ainsi, le point 19 est porté à de très hautes pression et température qui sont aptes à amorcer une détonation dans le mélange carburant-air se trouvant dans ladite chambre de combustion 2.

Comme le montre la figure 4, chacun des moyens d'allumage 10, 11 peut avantageusement comprendre deux bougies d'allumage 20, 21 diamétralement opposées par rapport au tube de prédétonation 4, 5 correspondant.

La figure 4 illustre de plus schématiquement les obstacles internes 22, disposés dans lesdits tubes de prédétonation 4 et 5 pour régler le rapport de blocage BR le long de ces derniers.

Les obstacles 22 situés de part et d'autre des moyens d'allumage 10, 11, dans les zones 23, ont un rapport de blocage assez élevé (au moins 0,58). Le but est de former un jet de gaz chauds et donc d'obtenir une transition laminaire -turbulente le plus rapidement possible. Un rapport de blocage plus élevé (jusqu'à 0,72) améliorerait cet effet, mais au détriment de la vitesse de purge des gaz brûlés. Cette zone étant celle dans laquelle on réalise l'allumage de tout le dispositif, il convient d'assurer qu'il y restera le moins possible de gaz brûlés.

Les obstacles 22 suivants situés dans les zones intermédiaires 24 ont un rapport de blocage moyen un peu plus faible (par exemple 0,44) qui est une valeur considérée comme proche de l'optimum. Cette série d'obstacles doit permettre d'accélérer la flamme depuis une valeur de quelques dizaines de m/s jusqu'à plusieurs centaines de m/s.

La série des obstacles 22 situés dans les zones 25 des extrémités 4I, 4E ; 5I, 5E possède un rapport de blocage encore plus faible (par exemple 0,25), car dans cette zone la flamme possède déjà une vitesse importante, de sorte qu'un rapport de blocage trop élevé deviendrait pénalisant en termes de traînée.

La focalisation des ondes issues des tubes de prédétonation 4, 5, ainsi que les réflexions successives sur le mur de poussée 3 et sur les parois, assurent la formation du point chaud 19 et l'amorçage de la détonation dans la chambre 2, avant que la remontée des ondes de détente formées à l'extrémité ouverte de chaque tube d'allumage n'interfère négativement avec ce phénomène d'amorçage.

## Revendications

1. Moteur (1) à détonations pulsées et à allumage commandé, fonctionnant avec un mélange détonant carburant-air et comportant :
- une chambre de combustion (2) fermée à l'une de ses extrémités par un mur de poussée (3), et
- au moins deux tubes de prédétonation (4, 5) pourvus de moyens d'allumage à basse énergie (10) et en communication avec ladite chambre de combustion (2) par une de leurs extrémités (41, 51) débouchant dans ladite chambre de combustion (2) en regard dudit mur de poussée (3), la disposition desdits tubes de prédétonation (4, 5) étant telle que les ondes qui les parcourent sont réfléchies par ledit mur de poussée (3) dans ladite chambre de combustion (2),
**caractérisé en ce que** :
- dans lesdits tubes de prédétonation (4, 5), les flammes sont amenées jusqu'à un état de propagation proche des conditions de blocage thermique sans chercher à atteindre le régime de détonation ; et
- la détonation dudit mélange détonant contenu dans ladite chambre de combustion est amorcée en un point (19) de ladite chambre de combustion (2) porté à de très hautes pression et température par les ondes de choc engendrées dans lesdits tubes de prédétonation (4, 5), puis réfléchies et focalisées par ledit mur de poussée (3) audit point (19).

2. Moteur selon la revendication 1,
**caractérisé en ce que** chaque tube de prédétonation (4, 5) est ouvert à son extrémité (4E, 5E) opposée à celle (41, 51) qui est en regard dudit mur de poussée (3) et **en ce que** lesdits moyens d'allumage à basse énergie (10, 11) sont disposés en position intermédiaire entre ces deux extrémités (4E, 4I ; 5E, 5I).

3. Moteur selon l'une quelconque des revendications 1 ou 2,
**caractérisé en ce que** lesdits moyens d'allumage à basse énergie (10, 11) comprennent, pour chaque tube de prédétonation, deux bougies d'allumage (20, 21) diamétralement opposées.

4. Moteur selon l'une des revendications 1 à 3, dans lequel chaque tube de prédétonation comporte des obstacles intérieurs successifs (22) définissant chacun un rapport de blocage (BR),
**caractérisé en ce que** lesdits rapports de blocage (BR) décroissent depuis lesdits moyens d'allumage à basse énergie (10, 11) jusqu'à chacune desdites extrémités dudit tube de prédétonation (4, 5).

5. Moteur selon la revendication 4,
**caractérisé en ce que**, de part et d'autre desdits moyens d'allumage (10, 11), dans des zones (23) voisines de ceux-ci, le rapport de blocage est élevé, de l'ordre de 0,58 ou supérieur.

6. Moteur selon l'une des revendications 4 ou 5,
**caractérisé en ce que**, dans les zones (25) voisines des deux extrémités (4E, 5E ; 41, 51) de chaque tube de prédétonation (4, 5), le rapport de blocage est faible, de l'ordre de 0,25.

7. Moteur selon les revendications 5 et 6,
**caractérisé en ce que**, entre les zones (24) voisines desdits moyens d'allumage (10, 11) et les zones (25) voisines desdites extrémités (4E, 5E ; 41, 51), le rapport de blocage est moyen, de l'ordre de 0,44.

8. Moteur selon l'une des revendications 1 à 7,
**caractérisé en ce qu'**il comporte deux tubes de prédétonation (4, 5) en positions latérales diamétralement opposées par rapport à ladite chambre de combustion (2).

## Claims

1. An engine (1) with pulsed detonations and controlled ignition, operating on an explosive air-fuel mixture and comprising:
- a combustion chamber (2) closed at one of its ends by a thrust wall (3), and
- at least two predetonation tubes (4, 5) provided with low-energy ignition means (10) and in communication with said combustion chamber (2) via one of their ends (41, 51) opening into said combustion chamber (2) facing said thrust wall (3), the arrangement of said predetonation tubes (4, 5) being such that the waves traveling through them are reflected by said thrust wall (3) into said combustion chamber (2),
**characterized in that**:
- in said predetonation tubes (4, 5), the flames are brought into a state of propagation close to the conditions of thermal blockage without seeking to attain detonation regime; and
- detonation of said explosive mixture contained in said combustion chamber is initiated at a point (19) of said combustion chamber (2) which is raised to a very high pressure and a very high temperature by the shockwaves generated in said predetonation tubes (4, 5), then reflected off and focused by said thrust wall (3) at said point (19).

2. The engine as claimed in claim 1,
**characterized in that** each predetonation tube (4, 5) is open at its opposite end (4E, 5E) to the end (41, 51) that faces said thrust wall (3), and **in that** said low-energy ignition means (10, 11) are positioned at an intermediate point between these two ends (4E, 41; 5E, 5I).

3. The engine as claimed in either of claims 1 and 2,
**characterized in that** said low-energy ignition means (10, 11) comprise, for each predetonation tube, two diametrically opposed igniter plugs (20, 21).

4. The engine as claimed in one of claims 1 to 3, in which each predetonation tube comprises successive internal obstacles (22) each defining a blockage ratio (BR),
**characterized in that** said blockage ratios (BR) decrease from said low-energy ignition means (10, 11) as far as each of said ends of said predetonation tube (4, 5).

5. The engine as claimed in claim 4,
**characterized in that**, on each side of said ignition means (10, 11), in zones (23) adjacent thereto, the blockage ratio is high, of the order of 0.58 or higher.

6. The engine as claimed in one of claims 4 and 5,
**characterized in that**, in the zones (25) adjacent to the two ends (4E, 5E; 41, 51) of each predetonation tube (4, 5), the blockage ratio is low, of the order of 0.25.

7. The engine as claimed in claims 5 and 6,
**characterized in that**, between the zones (24) adjacent to said ignition means (10, 11) and the zones (25) adjacent to said ends (4E, 5E; 4I, 5I), the blockage ratio is medium, of the order of 0.44.

8. The engine as claimed in one of claims 1 to 7,
**characterized in that** it comprises two predetonation tubes (4, 5) in lateral positions that are diametrically opposed with respect to said combustion chamber (2).

## Patentansprüche

1. Pulsdetonationstriebwerk (1) mit Fremdzündung, der mit einem Kraftstoff-Luft-Detonationsgemisch arbeitet und aufweist:
- einen Brennraum (2), der an einem seiner Enden durch eine Schubwand (3) verschlossen wird, und
- mindestens zwei Vordetonationsrohre (4, 5), die mit Niedrigenergie-Zündeinrichtungen (10) versehen sind und mit dem Brennraum (2) über eines ihrer Enden (41, 5I) in Verbindung stehen, das in den Brennraum (2) gegenüber der Schubwand (3) mündet, wobei die Anordnung der Vordetonationsrohre (4, 5) so ist, dass die sie durchquerenden Wellen von der Schubwand (3) in den Brennraum (2) reflektiert werden,
**dadurch gekennzeichnet, dass**:
- in den Vordetonationsrohren (4, 5) die Flammen bis in einen Ausbreitungszustand nahe den Bedingungen der thermischen Blockierung gebracht werden, ohne zu versuchen, den Detonationsbetrieb zu erreichen; und
- die Detonation des im Brennraum enthaltenen Detonationsgemischs an einem Punkt (19) des Brennraums (2) eingeleitet wird, der durch die in den Vordetonationsrohren (4, 5) erzeugten und dann von der Schubwand (3) auf den Punkt (19) reflektierten und fokussierten Schockwellen auf einen sehr hohen Druck und eine sehr hohe Temperatur gebracht wird.

2. Triebwerk nach Anspruch 1, **dadurch gekennzeichnet, dass** jedes Vordetonationsrohr (4, 5) an seinem Ende (4E, SE) offen ist, das demjenigen (41, 5I) gegenüberliegt, das sich vor der Schubwand (3) befindet, und dass die Niedrigenergie-Zündeinrichtungen (10, 11) in einer Zwischenposition zwischen diesen zwei Enden (4E, 41; 5E, 5I) angeordnet sind.

3. Triebwerk nach einem der Ansprüche 1 oder 2, **dadurch gekennzeichnet, dass** die Niedrigenergie-Zündeinrichtungen (10, 11) für jedes Vordetonationsrohr zwei einander diametral gegenüberliegende Zündkerzen (20, 21) enthalten.

4. Triebwerk nach einem der Ansprüche 1 bis 3, bei dem jedes Vordetonationsrohr aufeinanderfolgende innere Hindernisse (22) aufweist, die je ein Blockierverhältnis (BR) definieren, **dadurch gekennzeichnet, dass** die Blockierverhältnisse (BR) von den Niedrigenergie-Zündeinrichtungen (10, 11) bis zu jedem der Enden des Vordetonationsrohrs (4, 5) abnehmen.

5. Triebwerk nach Anspruch 4, **dadurch gekennzeichnet, dass** zu beiden Seiten der Zündeinrichtungen (10, 11) in diesen benachbarten Zonen (23) das Blockierverhältnis hoch ist, in der Größenordnung von 0,58 oder darüber.

6. Triebwerk nach einem der Ansprüche 4 oder 5, **dadurch gekennzeichnet, dass** in den den zwei Enden (4E, 5E; 41, 5I) jedes Vordetonationsrohrs (4, 5) benachbarten Zonen (25) das Blockierverhältnis gering ist, in der Größenordnung von 0,25.

7. Triebwerk nach den Ansprüchen 5 und 6, **dadurch gekennzeichnet, dass** zwischen den den Zündeinrichtungen (10, 11) benachbarten Zonen (24) und den den Enden (4E, 5E; 41, 5I) benachbarten Zonen (25) das Blockierverhältnis mittelmäßig ist, in der Größenordnung von 0,44.

8. Triebwerk nach einem der Ansprüche 1 bis 7, **dadurch gekennzeichnet, dass** es zwei Vordetonationsrohre (4, 5) in seitlichen Stellungen einander bezüglich des Brennraums (2) diametral gegenüberliegend aufweist.
